# FASCICULE DE BREVET EUROPEEN

(11) **EP 1 204 477 B1**
(45) Date de publication et mention de la délivrance du brevet: **06.01.2010**
(21) Numéro de dépôt: 00940448.4
(22) Date de dépôt: 07.06.2000
(51) Int. Cl.: B01J 35/10, B01J 23/38, B01J 23/10, B01J 37/02, C01B 15/029

(54) **PROCEDE DE PREPARATION D'UN CATALYSEUR METALLIQUE SUPPORTE CONTENANT UNE ETAPE DE TRAITEMENT A LA SOLUTION AQUEUSE DU BROME ET DES IONS BROMURE.**
VERFAHREN ZUR HERSTELLUNG METALLISCHEN GETRÄGERTEN KATALYSATOREN BEINHALTEND EINEN BEHANDLUNGSCHRITT MIT WÄSSRIGER LÖSUNG AUS BROM UND BROMIONEN
PROCCES FOR THE PRODUCTION OF SUPPORTED METAL CATALYST CONTAINING A TREATMENT STEP WITH AQUEOUS SOLUTION CONTAINING BROME AND BROMIDE IONS.

(30) Priorité: 16.07.1999 FR 9909260; 09.08.1999 FR 9910310
(43) Date de publication de la demande: 15.05.2002
(73) Titulaire: ARKEMA FRANCE, 92700 Colombes (FR)
(72) Inventeur: DEVIC, Michel, F-69110 Saint Foy les Lyon (FR)
(74) Mandataire: Dang, Doris
(86) Numéro de dépôt international: PCT/FR2000/001552
(87) Numéro de publication internationale: WO 2001/005501

(56) Documents cités:
- EP-A- 0 266 875
- EP-A- 0 685 451
- US-A- 5 128 114
- DATABASE WPI Section Ch, Week 197535 Derwent Publications Ltd., London, GB; Class A41, AN 1975-57901W XP002133679 & JP 50 053333 A (KUNUGI T), 12 mai 1975 (1975-05-12)

## Description

La présente invention concerne un procédé de préparation d'un catalyseur métallique supporté, apte à la fabrication directe du peroxyde d'hydrogène à partir d'hydrogène et d'oxygène contenant les étapes essentielles définies dans le libellé de la revendication 1. D'autres caractéristiques techniques optionelles sont décrites dans les revendications dépendantes 2 à 12.

La faible productivité du procédé de fabrication catalytique du peroxyde d'hydrogène directement à partir d'hydrogène et d'oxygène est un frein à son développement. Des tentatives pour améliorer cette productivité sont nombreuses. On peut citer notamment US 3 336 112, US 3 361 533, US 4 007 526, US 4 009 252, US 4 279 883 et US 4 335 092. Ces études sont principalement basées sur le concept général, à savoir la stabilisation du peroxyde d'hydrogène à l'aide d'agent séquestrant ou d'inhibiteur de décomposition.

D'autres voies pour améliorer la productivité en peroxyde d'hydrogène du procédé direct ont également été explorées. Ainsi, le brevet US 4 379 778 divulgue un procédé de fabrication directe du peroxyde d'hydrogène à partir d'hydrogène et d'oxygène dans un milieu aqueux comprenant des inhibiteurs de décomposition, en présence d'un catalyseur palladium-charbon préalablement traité avec un aldéhyde ou une cétone et, de préférence, prétraité également avec une solution diluée d'acide chlorhydrique.

L'emploi d'un bromure dans le milieu aqueux réactionnel du procédé direct de fabrication de peroxyde d'hydrogène est décrit dans le brevet US 4 772 458.

Enfin, les brevets US 5 128 114 et US 5 352 645 décrivent une méthode de préparation des catalyseurs à base de palladium ou platine-palladium supporté sur des microsphères uniformes, non-agglomérées et poreuses de silice, résistant à l'attrition grâce à l'utilisation de citrate d'ammonium ou d'urée comme additif et aptes à la fabrication directe du peroxyde d'hydrogène.

L'exemple 12 du brevet US 5 128 114 décrit la préparation en deux étapes d'un catalyseur supporté contenant environ 0,05 % en poids de platine et 1 % en poids de palladium sur des microsphères poreuses de silice. Le support est d'abord préparé par atomisation d'un mélange de silice Ludox AS 40 et d'urée, puis calciné à 650°C sous azote. Ce support est ensuite ajouté à une solution de Pt et Pd, préalablement préparée par dissolution de H₂PtCl₆ et PdCl₂ dans l'eau, portée à une température comprise entre 60 et 70°C et acidifiée par de l'HCl concentré jusqu'à l'obtention d'un pH d'environ 1,2. Le mélange résultant est agité, puis atomisé et enfin, la poudre obtenue est réduite sous courant d'hydrogène à 300°C.

La préparation du catalyseur supporté suivant l'exemple 15 du brevet US 5 352 645 est similaire à celle décrite à l'exemple 12 du brevet US 5 128 114 avec toutefois une différence. En effet, le mélange résultant, au lieu d'être atomisé, est séché sous vide à 100°C pendant toute une nuit, puis le solide séché est réduit sous courant d'hydrogène à 100°C. Des cristallites métalliques de l'ordre de 30 à 50 Å ont ainsi été obtenues.

La Société déposante a mis au point un catalyseur supporté à base d'au moins un métal choisi dans le groupe M formé de palladium, platine, ruthénium, rhodium, d'iridium, d'osmium, d'holmium et d'or et, en particulier, un catalyseur bimétallique supporté. Le catalyseur bimétallique supporté est en général constitué d'un métal du groupe M majoritaire et d'un métal du groupe M minoritaire. Le métal majoritaire représente environ 0,1 à 10 % en poids du catalyseur et de préférence entre 0,5 à 1 % en poids. Le métal minoritaire représente environ 0,001 à 0,1 % en poids du catalyseur et de préférence entre 0,01 et 0,05 %.

Comme métal majoritaire, le palladium et l'or sont avantageusement choisis.

Comme métal minoritaire, le platine et l'holmium sont avantageusement choisis.

Le catalyseur bimétallique supporté particulièrement préféré est constitué de palladium comme métal majoritaire et du platine comme métal minoritaire.

Le catalyseur mis au point concerne aussi un catalyseur plurimétallique supporté constitué d'un métal du groupe M majoritaire et de plusieurs métaux du groupe M minoritaires. Le catalyseur plurimétallique supporté préféré comprend le palladium, comme métal majoritaire, le platine et au moins un métal du groupe M, comme métaux minoritaires.

La teneur en métal majoritaire dans le catalyseur plurimétallique supporté est pratiquement identique à celle du catalyseur bimétallique et, chaque métal minoritaire peut être présent dans le catalyseur en quantité représentant environ 0,001 à 0,1 % en poids du catalyseur et de préférence entre environ 0,01 et 0,05 %.

Le catalyseur mis au point concerne aussi un catalyseur monométallique supporté avec, de préférence, le platine ou l'or comme constituant métallique du groupe M. La teneur en constituant métallique est en général compris entre 0,1 et 10 % en poids du catalyseur et de préférence compris entre 0,5 et 1 % en poids.

Le catalyseur métallique supporté est de préférence, caractérisé par des amas de métal ou métaux cristallisé(s) de taille comprise entre 0,1 et 20 µm et, de préférence, comprise entre 1 et 10 µm.

La silice, l'alumine, le charbon et le silicoaluminate peuvent convenir comme support. Toutefois, on préfère utiliser la silice et avantageusement, des particules de silice de taille moyenne comprise entre 1 et 50 µm. On préfère également utiliser de la silice de surface spécifique BET supérieure à 200 m²/g et le plus souvent comprise entre 300 et 600 m²/g. La silice microporeuse d'Aldrich référencée 28,851-9 s'est avérée particulièrement intéressante.

Le taux de fer (Fe) dans le support choisi est, de préférence, inférieur à 0,001 % en poids.

L'objet de l'invention est un procédé de préparation de catalyseur supporté à base d'au moins un métal du groupe M précédemment défini comprenant successivement une étape d'imprégnation d'une solution à base d'un ou de plusieurs sel(s) d'au moins un métal, choisi du groupe M, sur un support et, une étape de réduction est caractérisé en ce qu'à l'issue de l'étape de réduction, le catalyseur est soumis à un traitement avec une solution aqueuse (A) acide comprenant du brome et des ions bromure, tel que décrit dans le libellé de la revendication indépendante 1.

Selon la présente invention, la concentration des ions bromure dans la solution aqueuse (A) peut être comprise entre 20 et 200 mg/l et de préférence comprise entre 20 et 100 mg/l. La concentration en brome (Br₂) peut être comprise entre 2 et 20 mg/l et de préférence comprise entre 2 et 10 mg/l.

Le pH de la solution aqueuse (A) est de préférence compris entre 1 et 3.

La solution aqueuse (A) peut être préparée par exemple par dissolution d'un bromure de métal alcalin ou alcalino-terreux dans de l'eau, puis par ajout du brome sous forme d'eau de brome de concentration avantageusement voisine de 1 % en poids et enfin, le pH peut être ajusté à l'aide d'un acide. Lorsque le catalyseur à préparer comprend du Pd, la solution (A) est rendue acide par de l'acide sulfurique ou de l'acide phosphorique. L'acide orthophosphorique (H₃PO₄) est toutefois préféré.

La solution (A) particulièrement préférée comprend environ 100 mg/l de NaBr, 10 mg/l de Br₂ et 10 g/l d'acide orthophosphorique.

On opère en général avec une quantité de catalyseur supporté réduit comprise entre 5 et 50 g par litre de solution (A). Une quantité de catalyseur voisine de 10 g par litre de solution (A) est préférée.

La température de traitement est en générale comprise entre 10 et 80°C, et de préférence comprise entre 40 et 60°C.

La durée de traitement peut varier dans de larges limites. Cette durée peut être comprise entre 1 et 12 heures, et de préférence comprise entre 4 et 8 heures.

Après le traitement, le solide catalytique est séparé de la solution aqueuse (A) par tout moyen connu, puis séché à une température comprise entre 100 et 140°C et de préférence voisine de 120°C. Le séchage à pression atmosphérique est le plus souvent utilisé, par exemple à l'aide d'une étuve ventilée.

L'imprégnation du support peut être effectuée par tout moyen connu. Avantageusement, l'étape d'imprégnation consiste à mettre en contact le support choisi avec une solution aqueuse la plus concentrée possible, du ou des sel(s) d'au moins un métal du groupe M de manière à former une pâte. Cette mise en contact peut être effectuée par ajout de la solution aqueuse concentrée de sel(s) métallique(s), à température ambiante, dans un malaxeur contenant le support. La durée du malaxage dépend en général de la quantité de support mise en jeu, mais pour des raisons de productivité on préfère, après l'ajout de la solution métallique, malaxer pendant environ 0,5 à 3 heures.

Après le malaxage et avant l'étape de réduction, la pâte résultante est de préférence filtrée, puis essorée et enfin séchée. Pour assurer un essorage maximal, il est recommandé de tasser soigneusement la pâte filtrée. A l'issu de l'essorage, le support imprégné est séché à une température de préférence comprise entre 20 et 50°C. Le séchage est avantageusement effectué dans les conditions favorisant une cristallisation lente et, de préférence, en l'absence d'agitation. La durée de séchage dépend en général de la température et de la pression. Elle est le plus souvent comprise entre 1 et 7 jours. A titre indicatif dans une étuve à vide chauffée à 40°C, il suffit de 48 heures pour sécher le solide imprégné et essoré. Le séchage peut également être effectué à température ambiante pendant une semaine.

Un mode particulier de préparation du catalyseur supporté à base d'au moins un métal du groupe M comprend successivement les étapes suivantes :
(a) la mise en contact d'un support, choisi dans le groupe formé par la silice, l'alumine, le charbon et le silicoaluminate, avec une solution aqueuse concentrée de(s) sel(s) d'au moins un métal du groupe M de manière à former une pâte
(b) filtration, essorage, puis séchage de la pâte dans des conditions favorisant une cristallisation lente
(c) réduction du solide séché de l'étape (b)
(d) traitement du solide réduit de l'étape (c) avec une solution aqueuse (A) acide, comprenant du brome et des ions bromure
(e) filtration du solide traité à l'étape (d) et séchage à une température comprise entre 100 et 140°C.

Les conditions opératoires préférées de chaque étape de la préparation sont les mêmes que celles décrites précédemment. S'agissant de l'étape de réduction, on peut appliquer les conditions expérimentales déjà utilisées dans l'art antérieur, notamment US 5 128 114 et US 5 352 645.

Tout moyen connu pour favoriser la dissolution des sels métalliques, afin d'obtenir une solution aqueuse concentrée pour l'étape d'imprégnation (a), peut être utilisé. On peut citer notamment l'emploi de quelques gouttes d'acide, d'un léger chauffage et d'agitation à l'aide des ultrasons.

On préfère broyer le solide séché provenant de l'étape (b) avant de la soumettre à l'étape de réduction. De façon pratique, le four utilisé pour la réduction est d'abord purgé par de l'azote pendant un temps suffisant, en général 15 et 60 minutes, puis balayé par de l'hydrogène et ensuite porté à une température comprise entre 250 et 350°C. La durée de réduction du solide à la température choisie peut être comprise entre 1 et 3 heures. Après réduction, le four est ramené à la température ambiante puis, purgé à l'azote.

Le catalyseur préparé selon l'invention peut être utilisé dans un procédé de fabrication directe du peroxyde d'hydrogène à partir d'hydrogène et d'oxygène. Ce procédé est caractérisé en ce que l'on met en oeuvre le catalyseur précédemment décrit et préparé.

Le catalyseur peut être mis en oeuvre aussi bien dans un procédé de fabrication directe du peroxyde d'hydrogène en réacteur tubulaire, qu'en réacteur agité. Il convient tout particulièrement au procédé dans lequel, l'hydrogène et l'oxygène sont injectés dans le milieu réactionnel aqueux du réacteur agité et de l'oxygène est introduit dans la phase gazeuse continue du réacteur agité.

Le catalyseur peut être avantageusement mis en oeuvre dans un procédé de fabrication directe du peroxyde d'hydrogène selon lequel, l'hydrogène et l'oxygène sont injectés dans la partie inférieure du milieu réactionnel aqueux et, de l'oxygène est introduit dans la phase gazeuse continue du réacteur agité en quantité telle que la composition de cette phase gazeuse continue soit en dehors de la zone d'inflammabilité.

Le catalyseur s'est avéré très intéressant lorsque le réacteur agité est muni de plusieurs turbines disposées le long d'un axe vertical unique. Lorsque l'hydrogène et l'oxygène sont injectés sous forme de petites bulles dans la partie inférieure du milieu réactionnel aqueux dans des proportions telles que le rapport des débits molaires hydrogène sur oxygène soient supérieurs à 0,0416, une productivité en peroxyde d'hydrogène supérieure à celle de l'art antérieur est obtenue.

Le catalyseur s'est avéré particulièrement intéressant dans un procédé continu de fabrication directe de peroxyde d'hydrogène avec recyclage des réactifs, comme l'hydrogène.

### PARTIE EXPERIMENTALE

### Préparation des catalyseurs

### Exemple 1

On ajoute à température ambiante dans 50 cm³ d'eau déminéralisée :
- 0,33 g de PdCl₂ (réf. Aldrich : 20,588-5)
- 0,021 g de H₂PtCl₆ (réf. Aldrich : 25,402-9)
et quelques gouttes d'HCl à 30 % en poids pour favoriser la dissolution.
- 20 g de silice microporeuse Aldrich (réf. 28,851-9) ayant les caractéristiques suivantes :

| | |
|---|---|
| Taille moyenne des particules | : 25 µm |
| Surface BET | : 500 m²/g |
| Volume des pores | : 0,75 cm³/g |
| Diamètre moyen des pores | : 60 Å |

sont placés dans un bécher de verre, agité par un barreau magnétique. On ajoute alors rapidement les 50 cm³ de solution de sels métalliques préparée précédemment.

Après 1^{H}30 d'agitation à 25°C, on obtient une bouillie épaisse qui est filtrée sur un fritté N° 3 et essoré sous vide pendant 2^{H}30. Le gâteau de filtration est placé dans un cristallisoir sur une toile de verre et séché 48 heures à 40°C dans une étuve à vide. Le solide séché est ensuite réduit dans un courant de 60 Nl/h d'H₂ à 300°C pendant 1^{H}30 puis refroidi jusqu'à la température ambiante en 6 heures.

Le solide réduit est alors traité à 40 ° C pendant 5 heures avec 2 000 cm³ de solution contenant 100 mg/l de NaBr, 10 mg/l de Br₂ et 10 g/l d'H₃PO₄.

On filtre ensuite le mélange résultant et on sèche le catalyseur pendant 24 heures à l'étuve ventilée à 120°C.

Après analyse le catalyseur contient 0,7 % de Pd et 0,03 % de platine en poids.

### Exemple 2

On opère comme pour l'exemple 1 avec comme seule différence que le solide réduit est utilisé directement comme catalyseur sans traitement avec la solution aqueuse bromée.

### Exemple 3

Après l'imprégnation de la silice comme à l'exemple 1, au lieu de filtrer la bouillie et d'essorer la pâte filtrée, on sèche la bouillie dans un évaporateur rotatif de laboratoire (Heidolph avec un ballon en verre cannelé de 500 cm³). Le ballon tourne dans un bain d'huile à 120°C sous vide de 40 mm Hg. Après l'évaporation, le solide est réduit puis traité comme décrit à l'exemple 1.

### Exemple 4

On opère comme décrit à l'exemple 3 sauf que le solide après réduction n'est pas traité par la solution aqueuse bromée.

### Exemple 5

On opère comme décrit à l'exemple 3 sauf qu'après imprégnation la bouillie est laissé à l'air ambiant pendant une semaine à la place du séchage dans l'évaporateur rotatif.

### Exemple 6

On opère comme décrit à l'exemple 1 sauf que le Pd est remplacé par l'Au.

### Exemple 7

On opère comme décrit à l'exemple 1 sauf que le Pt est remplacé par le Ho.

### Exemple 8

On opère comme décrit à l'exemple 1 sauf que le Pt est remplacé par l'Au.

### Préparation de la solution de peroxyde d'hydrogène

### Mode opératoire général

Dans un réacteur cylindrique de capacité totale, 1 500 cm³ muni de 2 ou 3 turbines flasquées de 45 mm de diamètre, de 4 contrepales verticales et d'un faisceau tubulaire de refroidissement, on introduit une quantité choisie de milieu réactionnel aqueux et de catalyseur.

Le milieu réactionnel aqueux est préparé par addition de 12 g de H₃PO₄, 58 mg de NaBr et 5 mg de Br₂ dans 1 000 cm³ d'eau déminéralisée.

Le réacteur est pressurisé par injection d'un débit choisi d'oxygène dans la phase gazeuse continue. La pression reste constante grâce à un régulateur de pression. Le milieu liquide est porté à la température choisie par circulation d'eau thermostatée dans le faisceau de tubes de refroidissement.

L'agitation est réglée à 1 900 t/min et des débits choisis d'oxygène et d'hydrogène sont injectés dans la phase liquide au centre de la turbine inférieure.

On mesure le débit et la teneur en hydrogène du mélange gazeux sortant du régulateur de pression. Après l'écoulement du temps de réaction prévu, on coupe l'arrivée d'hydrogène et d'oxygène dans le milieu réactionnel aqueux et on maintient l'injection d'oxygène dans la phase gazeuse continue jusqu'à disparition de l'hydrogène dans cette dernière. On coupe alors l'arrivée d'oxygène et on décomprime le réacteur.

La solution aqueuse de peroxyde d'hydrogène est pesée et séparée du catalyseur par filtration sur un filtre Millipore^{®}.

Cette solution est ensuite dosée par iodométrie pour déterminer la concentration en H₂O₂. La sélectivité en H₂O₂ est définie comme étant le pourcentage du nombre de moles d'H₂O₂ formées sur le nombre de moles d'H₂ consommées.

Le taux de conversion est défini comme étant le pourcentage du volume d'H₂ consommé sur le volume d'H₂ introduit.

Les résultats catalytiques pour chaque essai sont résumés dans le Tableau I.

**Tableau I**

| **N° d'essai** | **Catalyseur suivant l'exemple** | **MILIEU REACTIONNEL** | | **CONDITIONS DE REACTIONS** | | | | | | | **RESULTATS** | | |
|---|---|---|---|---|---|---|---|---|---|---|---|---|---|
| | | CATALYSEUR | SOLN. DE TRAVAIL | P (bar) | T° de réaction (°C) | H₂ injecté dans la phase liquide (Nl/h) | O₂ injecté dans la phase liquide (Nl/h) | O₂ injecté dans la phase gaz (Nl/h) | Nombre de turbines | Durée (h) | H₂O₂ (%) | Sélectivité H₂O₂ (%) | Conversion H₂ (%) |
| | | Poids (g) | Poids (g) | | | | | | | | | | |
| 1 | 1 | 6 | 700 | 50 | 20 | 80 | 188 | 1 760 | 2 | 3 | 17,5 | 97 | 42,0 |
| 2 | 1 | 6 | 700 | 50 | 20 | 80 | 188 | 1 760 | 2 | 3 | 17,4 | 96 | 42,0 |
| 3 | 2 | 6 | 700 | 50 | 20 | 80 | 188 | 1 760 | 2 | 3 | 16,2 | 85 | 45,0 |
| 4 | 3 | 6 | 700 | 50 | 20 | 80 | 160 | 1760 | 2 | 3 | 16,3 | 84 | 45,8 |
| 5 | 4 | 6 | 700 | 50 | 20 | 80 | 160 | 1 760 | 2 | 3 | 15,4 | 82 | 44,0 |
| 6 | 1 | 6 | 700 | 50 | 41,2 | 120 | 240 | 2640 | 2 | 1 | 12,2 | 90 | 60,2 |
| 7 | 5 | 6 | 700 | 50 | 41,5 | 120 | 240 | 2640 | 3 | 1 | 12,4 | 86 | 64,3 |
| 8 | 1 | 8,5 | 1 000 | 50 | 39,8 | 120 | 240 | 2 640 | 3 | 1 | 10,6 | 90 | 72,5 |
| 9 | 6 | 8,5 | 1 000 | 50 | 40,5 | 120 | 240 | 2640 | 3 | 1 | 6,4 | 54 | 71,6 |
| 10 | 7 | 8,5 | 1 000 | 50 | 39,5 | 120 | 240 | 2640 | 3 | 1 | 7,8 | 76 | 61,6 |
| 11 | 8 | 8,5 | 1 000 | 50 | 40 | 120 | 240 | 2640 | 3 | 1 | 7,9 | 73 | 65,6 |

## Revendications

1. Procédé de préparation d'un catalyseur supporté à base d'au moins un métal du groupe M formé de palladium, platine, ruthénium, rhodium, d'iridium, d'osmium, d'holmium et d'or, comprenant successivement une étape d'imprégnation d'une solution à base d'un ou de plusieurs sel(s) d'au moins un métal du groupe M sur un support, et une étape de réduction **caractérisée en ce qu'**à l'issue de l'étape de réduction, le catalyseur est soumis à un traitement avec une solution aqueuse (A) acide comprenant du brome et des ions bromure.

2. Procédé selon la revendication 1 **caractérisé en ce que** la concentration des ions bromure dans la solution aqueuse (A) est comprise entre 20 et 200 mg/l, et de préférence comprise entre 20 et 100 mg/l.

3. Procédé selon la revendication 1 ou 2 **caractérisé en ce que** la concentration en brome est comprise entre 2 et 20 mg/l et de préférence comprise entre 2 et 10 mg/l.

4. Procédé selon l'une quelconque des revendications 1 à 3 **caractérisé en ce que** le pH de la solution aqueuse (A) est compris entre 1 et 3.

5. Procédé selon l'une quelconque des revendications 1 à 4 **caractérisé en ce que** la température de traitement est comprise entre 10 et 80°C et de préférence comprise entre 40 et 60°C.

6. Procédé selon l'une quelconque des revendications 1 à 5 **caractérisé en ce qu'**après le traitement, le solide catalytique est séparé de la solution A puis séché à une température comprise entre 100 et 140°C.

7. Procédé selon l'une quelconque des revendications 1 à 6 **caractérisé en ce qu'**après imprégnation et avant l'étape de réduction, la pâte résultante est filtrée, puis essorée et enfin séchée.

8. Procédé selon la revendication 7 **caractérisé en ce que** le séchage est effectué dans des conditions favorisant une cristallisation lente.

9. Procédé selon l'une des revendications 1 à 8 **caractérisé en ce que** le palladium et l'or sont avantageusement choisis.

10. Procédé selon l'une des revendications 1 à 9 **caractérisé en ce que** le catalyseur est un bimétallique supporté dans lequel le métal minoritaire représente entre 0,001 à 0,1 % en poids du catalyseur.

11. Procédé ou catalyseur selon la revendication 10 **caractérisé en ce que** le métal minoritaire est le platine.

12. Procédé ou catalyseur selon l'une des revendications 1 à 11 **caractérisé en ce que** le support est une silice de surface spécifique BET, de préférence supérieure à 200m²/g.

## Claims

1. Process for preparing a supported catalyst based on at least one metal from the group M formed by palladium, platinum, ruthenium, rhodium, iridium, osmium, holmium and gold, comprising, in succession, a step of impregnating a solution based on one or more salt(s) of at least one metal from the group M on a support, and a reduction step, **characterized in that**, after the reduction step, the catalyst is subjected to a treatment with an aqueous acid solution (A) containing bromine and bromide ions.

2. Process according to Claim 1, **characterized in that** the concentration of bromide ions in the aqueous solution (A) is between 20 and 200 mg/l and preferably between 20 and 100 mg/l.

3. Process according to either of Claims 1 and 2, **characterized in that** the bromine concentration is between 2 and 20 mg/l and preferably between 2 and 10 mg/l.

4. Process according to any one of Claims 1 to 3, **characterized in that** the pH of the aqueous solution (A) is between 1 and 3.

5. Process according to any one of Claims 1 to 4, **characterized in that** the treatment temperature is between 10 and 80°C and preferably between 40 and 60°C.

6. Process according to any one of Claims 1 to 5, **characterized in that** after the treatment the catalytic solid is separated from the solution A and then dried at a temperature of between 100 and 140°C.

7. Process according to any one of Claims 1 to 6, **characterized in that**, after impregnation and before the reduction step, the resulting slurry is filtered, then drained and finally dried.

8. Process according to Claim 7, **characterized in that** the drying is carried out under conditions conducive to slow crystallization.

9. Process according to one of Claims 1 to 8, **characterized in that** palladium and gold are advantageously selected.

10. Process according to one of Claims 1 to 9, **characterized in that** the catalyst is a supported bimetallic catalyst in which the minor metal represents between 0.001 to 0.1% by weight of the catalyst.

11. Process or catalyst according to Claim 10, **characterized in that** the minor metal is platinum.

12. Process or catalyst according to one of Claims 1 to 11, **characterized in that** the support is a silica having a BET specific surface area of preferably greater than 200 m²/g.

## Patentansprüche

1. Verfahren zur Herstellung eines Trägerkatalysators auf Basis von mindestens einem Metall aus der von Palladium, Platin, Ruthenium, Rhodium, Iridium, Osmium, Holmium und Gold gebildeten Gruppe M, das nacheinander einen Schritt des Imprägnierens einer Lösung auf Basis von einem oder mehreren Salzen mindestens eines Metalls aus der Gruppe M auf einem Träger und einen Reduktionsschritt umfaßt, **dadurch gekennzeichnet, daß** man den Katalysator nach dem Reduktionsschritt einer Behandlung mit einer Brom und Bromidionen enthaltenden sauren wäßrigen Lösung (A) unterwirft.

2. Verfahren nach Anspruch 1, **dadurch gekennzeichnet, daß** die Bromidionenkonzentration in der wäßrigen Lösung (A) zwischen 20 und 200 mg/l und vorzugsweise zwischen 20 und 100 mg/l liegt.

3. Verfahren nach Anspruch 1 oder 2, **dadurch gekennzeichnet, daß** die Bromkonzentration zwischen 2 und 20 mg/l und vorzugsweise zwischen 2 und 10 mg/l liegt.

4. Verfahren nach einem der Ansprüche 1 bis 3, **dadurch gekennzeichnet, daß** der pH-Wert der wäßrigen Lösung (A) zwischen 1 und 3 liegt.

5. Verfahren nach einem der Ansprüche 1 bis 4, **dadurch gekennzeichnet, daß** die Temperatur der Behandlung zwischen 10 und 80°C und vorzugsweise zwischen 40 und 60°C liegt.

6. Verfahren nach einem der Ansprüche 1 bis 5, **dadurch gekennzeichnet, daß** man nach der Behandlung den katalytisch wirksamen Feststoff von der Lösung A abtrennt und dann bei einer Temperatur zwischen 100 und 140°C trocknet.

7. Verfahren nach einem der Ansprüche 1 bis 6, **dadurch gekennzeichnet, daß** man nach der Imprägnierung und vor dem Reduktionsschritt die erhaltene Paste filtriert, dann absaugt und schließlich trocknet.

8. Verfahren nach Anspruch 7, **dadurch gekennzeichnet, daß** man die Trocknung unter Bedingungen, die eine langsame Kristallisation begünstigen, durchführt.

9. Verfahren nach einem der Ansprüche 1 bis 8, **dadurch gekennzeichnet, daß** man vorteilhafterweise Palladium und Gold wählt.

10. Verfahren nach einem der Ansprüche 1 bis 9, **dadurch gekennzeichnet, daß** es sich bei dem Katalysator um einen Bimetallträgerkatalysator handelt, in dem das in kleinerer Menge vorliegende Metall zwischen 0,001 und 0,1 Gew.-% des Katalysators ausmacht.

11. Verfahren oder Katalysator nach Anspruch 10, **dadurch gekennzeichnet, daß** es sich bei dem in kleinerer Menge vorliegenden Metall um Platin handelt.

12. Verfahren oder Katalysator nach einem der Ansprüche 1 bis 11, **dadurch gekennzeichnet, daß** es sich bei dem Träger um ein Siliciumdioxid mit einer spezifischen BET-Oberfläche von vorzugsweise mehr als 200 m²/g handelt.
